# EUROPEAN PATENT SPECIFICATION

(11) **EP 4 206 646 B1**
(45) Date of publication and mention of the grant of the patent: **12.03.2025**
(21) Application number: 22187729.3
(22) Date of filing: 29.07.2022
(51) Int. Cl.: G01N 3/08, G01N 15/08

(54) **SIMILARITY SIMULATION TEST DEVICE FOR SOLID-LIQUID COUPLING OF COAL AND ROCK MASS, AND METHOD FOR USING THE DEVICE**
ÄHNLICHKEITSSIMULATIONSTESTVORRICHTUNG ZUR FEST-FLÜSSIG-KOPPLUNG VON KOHLE UND GESTEINSMASSE UND VERFAHREN ZUR VERWENDUNG DER VORRICHTUNG
DISPOSITIF DE TEST DE SIMULATION DE SIMILARITÉ POUR LE COUPLAGE SOLIDE-LIQUIDE DU CHARBON ET D'UNE MASSE ROCHEUSE ET PROCÉDÉ D'UTILISATION DE CE DISPOSITIF

(30) Priority: 01.01.2022 CN 202210000066
(43) Date of publication of application: 05.07.2023
(73) Proprietor: Tiandi Science & Technology Co.,Ltd, Beijing 100013 (CN); CCTEG Coal Mining Research Institute, Beijing 102206 (CN); China Coal Research Institute, Beijing 100013 (CN)
(72) Inventor: PANG, Yihui, Beijing, 100013 (CN); REN, Shihua, Beijing, 100013 (CN); WANG, Chen, Beijing, 100013 (CN); ZHANG, Qi, Beijing, 100013 (CN)
(74) Representative: De Sandre, Emanuele

(56) References cited:
- CN-A- 105 891 447
- CN-A- 110 346 216

## Description

### FIELD

The present invention relates to the field of coal and, more particularly, to a test device for conducting a similarity simulation test on solid-liquid coupling of coal and rock mass, and a method for using the test device.

### BACKGROUND

A similar material simulation test is a technical means to reproduce an engineering site in a laboratory based on geological conditions, force conditions and boundary conditions of the engineering site, using similarity theories such as geometric similarity, mechanical similarity and physical parameter similarity, and is widely used in mining engineering, civil engineering, geotechnical engineering and other engineering fields.

At present, traditional similarity simulation tests mainly simulate mine pressure manifestation of coal and rock mass, and rarely can realize similarity simulation of solid-liquid coupling. Some scholars have carried out seepage experiments for small-scale coal or rock specimens. For example, invention patent CN202110000142.8 discloses a solid-liquid coupling experiment device and experiment method, in which the device is mainly used to analyze a seepage process of coal or rock specimens, focusing on the analysis of loading and unloading experiments conducted on small-scale coal or rock specimens, but the device cannot carry out similarity simulation tests on large-scale coal and rock mass. Some scholars have improved traditional similarity simulation test systems, to meet the basic requirements of similarity simulation tests on solid-liquid coupling. For example, invention patent CN201910567055.3 discloses a three-dimensional solid-liquid coupling similar simulation system and method for coal seam excavation, but the system is not much different from the traditional similarity simulation test system for coal seam excavation, and it is difficult to realize adjustment of water pressure and mine pressure. Invention patent CN201910513853.8 discloses a device and method for performing three-dimensional solid-liquid coupling similarity simulation of water accumulation in a coal mined-out area, but the system cannot realize loading and unloading change control, and it is difficult to simulate the influence of water pressure and mine pressure changes on the strength of coal and rock mass. Invention patent CN201811416280.9 discloses a solid-liquid coupling three-dimensional nondestructive monitoring system and method for mining overburden rocks, in which the system mainly simulates a seepage pattern of an upper rock layer at a mining site, but cannot realize simulation of stress, seepage, damage and destroy of the coal and rock mass under the action of solid-liquid coupling. CN 110346216 A and CN 105891447 A show a biaxial mechanical tester with water injection according to the preamble of the claim.

As discussed above, it can be known that the existing solid-liquid coupling experiment devices cannot control water pressure or mine pressure changes, cannot achieve simulation of stress, seepage, damage, destroy and other changes of coal and rock layers under the combined action of mine pressure and water pressure on the coal and rock mass. There is no such similarity simulation test device at home and abroad.

### SUMMARY

In view of the above problems, the present invention proposes a similarity simulation test device for solid-liquid coupling of coal and rock mass, and a method for using the similarity simulation test device. The similarity simulation test device can adjust water pressure and mine pressure to which the coal and rock mass is subjected, and realize similarity simulation test analysis of stress, seepage, damage and destroy of the coal and rock mass under the combined action of water pressure and mine pressure.

The invention is set out in the appended set of claims.

A similarity simulation test device for solid-liquid coupling of coal and rock mass includes: a test body carrying frame, a lateral carrying frame, a first loading mechanism, a second vertical loading mechanism, a third lateral loading mechanism, a hydraulic jack, and a stabilizing support beam.

The similarity simulation test device for solid-liquid coupling of the coal and rock mass consists of one test body carrying frame, two lateral carrying frames, one first loading mechanism, one second vertical loading mechanism, two third lateral loading mechanisms, two hydraulic jacks, and one stabilizing support beam. Both ends of the first loading mechanism are connected to respective first ends of the two hydraulic jacks, and respective second ends of the two hydraulic jacks are connected to the test body carrying frame. The lateral carrying frames are connected to the test body carrying frame, the second vertical loading mechanism, the third lateral loading mechanisms, and the stabilizing support beam. Both ends of the second vertical loading mechanism are connected to the two lateral carrying frames, correspondingly. The third lateral loading mechanisms are connected to the two lateral carrying frames. Both ends of the stabilizing support beam are connected to the two lateral carrying frames, correspondingly.

Further, the test body carrying frame includes: a sealing back plate, a lateral sealing plate, a water baffle, a sealing bottom plate, a bearing bottom plate, a water channel, a water collection bin, a first water outlet pipe, a second water outlet pipe, a support leg, a first connection trunnion, a second connection trunnion, a third connection trunnion, and a fourth connection trunnion. The sealing back plate is fixedly connected to the lateral sealing plate and the sealing bottom plate. The bearing bottom plate is fixedly connected to the sealing bottom plate, and the bearing bottom plate is slightly lower than the sealing bottom plate to form a step. The bearing bottom plate has a water channel, and the water channel is adjacent to the water baffle. The water baffle is configured to stop seeping water from flowing out of a test bench and allow the seeping water to flow into the water collection bin through the water channel. The water collection bin is configured to collect water that seeps out of the coal and rock mass materials during a test. The first water outlet pipe is configured to monitor changes in water pressure and discharge the water at the end of the test. The second water outlet pipe is configured to discharge the water stored in the water collection bin. The first connection trunnion is connected to the first end of the hydraulic jack. The second connection trunnion, the third connection trunnion, and the fourth connection trunnion are connected to the lateral carrying frame, forming a stable test bench.

Furthermore, the lateral carrying frame includes a carrying-frame support side plate, a carrying-frame guide hole, a carrying-frame threaded hole, a carrying-frame first connection trunnion, a carrying-frame second connection trunnion, a carrying-frame third connection trunnion, and a carrying-frame fourth connection trunnion. The carrying-frame first connection trunnion is connected to the second connection trunnion. The carrying-frame second connection trunnion is connected to the fourth connection trunnion. The carrying-frame third connection trunnion is connected to the third connection trunnion. The carrying-frame fourth connection trunnion is connected to one end of the stabilizing support beam.

Furthermore, the first loading mechanism includes a first loading pressure plate, a first loading rib plate, a water injection pipe, and a first loading connection trunnion; and the first loading connection trunnion is connected to the second end of the hydraulic jack.

Furthermore, the second vertical loading mechanism includes: a second loading pressure plate, a second loading fixing plate, a second loading guide pillar, a second loading bolt, a second loading connection trunnion. The second loading pressure plate is fixedly connected to the second loading guide pillar, the second loading fixing plate has a guide hole, and the second loading guide pillar is movable up and down along the guide hole. The second loading fixing plate has a threaded hole, and the second loading bolt applies a load to the second loading fixing plate through the threaded hole. The second loading connection trunnion is connected to the carrying-frame second connection trunnion.

Furthermore, the third lateral loading mechanism includes a third lateral loading pressure plate, a third lateral loading guide pillar, and a third lateral loading bolt; the third lateral loading guide pillar is fixedly connected to the third lateral loading pressure plate; and the third lateral loading bolt applies a load to the third lateral loading pressure plate through the carrying-frame threaded hole.

A method for using the similarity simulation test device for solid-liquid coupling of coal and rock mass includes:
S001, determining physical and mechanical parameters of similar materials and geometrical parameters of a model based on actual conditions at an engineering site;
S002, mounting a lateral carrying frame and a stabilizing support beam;
S003, mounting a third lateral loading mechanism;
S004, laying coal and rock mass materials;
S005, mounting a second vertical loading mechanism;
S006, adjusting vertical and lateral forces on the coal and rock mass;
S007, mounting a first loading mechanism;
S008, simulating an initial water pressure during a test;
S009, conducting a solid-liquid coupling test on the coal and rock mass;
S010, finishing the test and removing the similarity simulation test device.

### BRIEF DESCRIPTION OF DRAWINGS

FIG. 1 is a structure diagram of a similarity simulation test device for solid-liquid coupling of a coal and rock mass according to an embodiment of the present invention;
FIG. 2 is a front view of a similarity simulation test device for solid-liquid coupling of a coal and rock mass according to an embodiment of the present invention;
FIG. 3 is a side view of a similarity simulation test device for solid-liquid coupling of a coal and rock mass according to an embodiment of the present invention;
FIG. 4 is a structure diagram of a test body carrying frame according to an embodiment of the present invention;
FIG. 5 is an A-A section view of a test body carrying frame according to an embodiment of the present invention;
FIG. 6 is a top view of a test body carrying frame according to an embodiment of the present invention;
FIG. 7 is a side view of a test body carrying frame according to an embodiment of the present invention;
FIG. 8 is a structure diagram of a lateral carrying frame according to an embodiment of the present invention;
FIG. 9 is a top view of a lateral carrying frame according to an embodiment of the present invention;
FIG. 10 is a structure diagram of a first loading mechanism according to an embodiment of the present invention;
FIG. 11 is a top view of a first loading mechanism according to an embodiment of the present invention;
FIG. 12 is a structure diagram of a second vertical loading mechanism according to an embodiment of the present invention;
FIG. 13 is a front view of a second vertical loading mechanism according to an embodiment of the present invention;
FIG. 14 is a structure diagram of a third lateral loading mechanism according to an embodiment of the present invention;
FIG. 15 is an assembly diagram of a third lateral loading mechanism and a test body carrying frame according to an embodiment of the present invention;
FIG. 16 is a structure diagram of a hydraulic jack according to an embodiment of the present invention;
FIG. 17 is a structure diagram of a stabilizing support beam according to an embodiment of the present invention;
FIG. 18 is a flow diagram of a method for using a similarity simulation test device for solid-liquid coupling of a coal and rock mass according to an embodiment of the present invention.

### DETAILED DESCRIPTION OF EMBODIMENTS

The present application will be described in further detail below in conjunction with the accompanying drawings and specific embodiments. In the description of the present application, it should be noted that terms such as "central," "upper," "lower," "left," "right," "vertical," "horizontal," "inner" and "outer" should be construed to refer to the orientation as then described or as shown in the drawings under discussion. These terms are for convenience of description and do not indicate or imply that the device or element referred to must have a particular orientation or be constructed and operated in a particular orientation. Thus, these terms shall not be construed as limitation on the present invention.

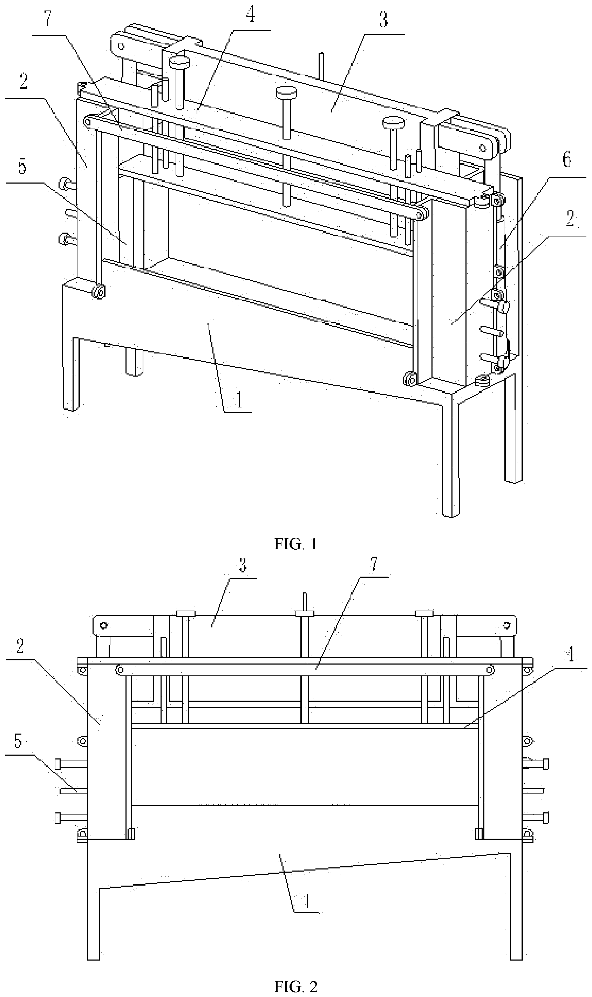

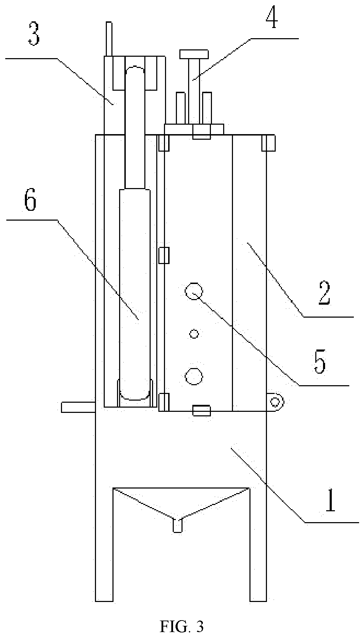

Referring to FIGS. 1-3, a similarity simulation test device for solid-liquid coupling of a coal and rock mass according to the present invention includes: a test body carrying frame 1, a lateral carrying frame 2, a first loading mechanism 3, a second vertical loading mechanism 4, a third lateral loading mechanism 5, a hydraulic jack 6, and a stabilizing support beam 7.

The similarity simulation test device for solid-liquid coupling of the coal and rock mass consists of one test body carrying frame 1, two lateral carrying frames 2, one first loading mechanism 3, one second vertical loading mechanism 4, two third lateral loading mechanisms 5, two hydraulic jacks 6, and one stabilizing support beam 7.

The lateral carrying frames 2 are each connected to the test body carrying frame 1, the second vertical loading mechanism 4, the third lateral loading mechanisms 5, and the stabilizing support beam 7. Both ends of the first loading mechanism 3 are connected to respective first ends of the two hydraulic jacks 6, and respective second ends of the two hydraulic jacks 6 are connected to the test body carrying frame 1. Both ends of the second vertical loading mechanism 4 are connected to the two lateral carrying frames 2, correspondingly. The third lateral loading mechanisms 5 are connected to the two lateral carrying frames 2. Both ends of the stabilizing support beam 7 are connected to the two lateral carrying frames 2, correspondingly. Consequently, the stability of the test device is improved.

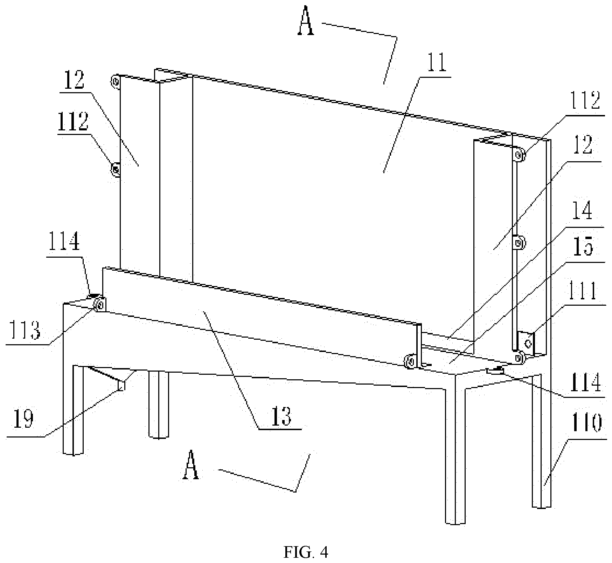

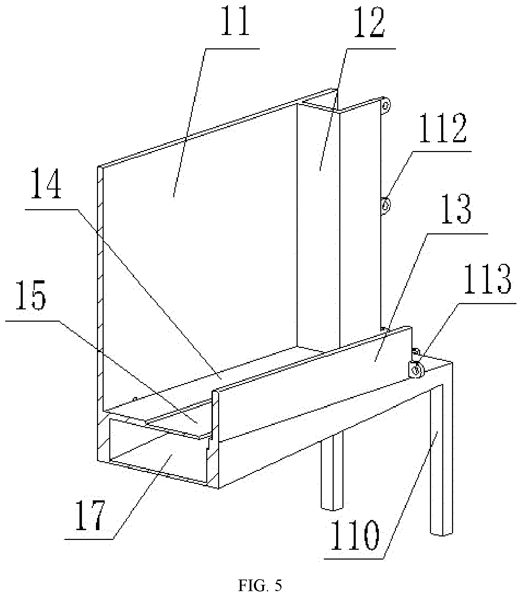

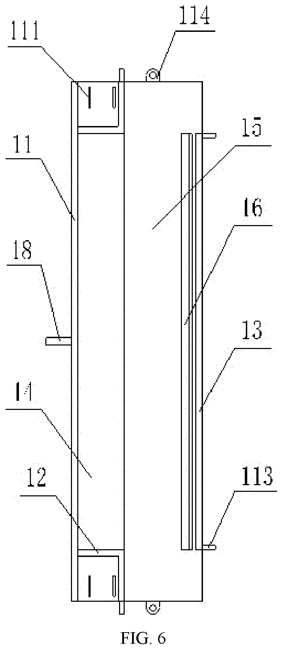

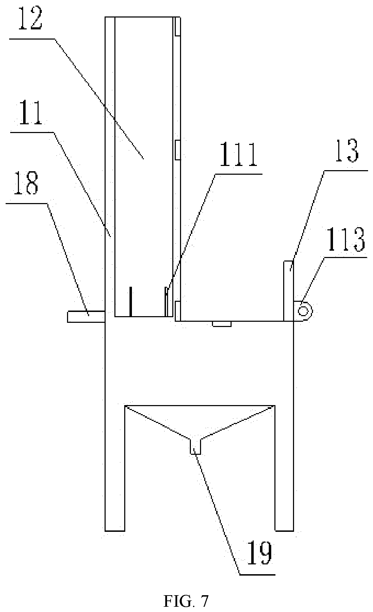

The test body carrying frame 1 mainly includes: a sealing back plate 11, a lateral sealing plate 12, a water baffle 13, a sealing bottom plate 14, a bearing bottom plate 15, a water channel 16, a water collection bin 17, a first water outlet pipe 18, a second water outlet pipe 19, a support leg 110, a first connection trunnion 111, a second connection trunnion 112, a third connection trunnion 113, and a fourth connection trunnion 114, as shown in FIGS. 4-7.

The sealing back plate 11 is fixedly connected to the lateral sealing plate 12 and the sealing bottom plate 14. The bearing bottom plate 15 is fixedly connected to the sealing bottom plate 14, and the bearing bottom plate 15 is slightly lower than the sealing bottom plate 14 to form a step.

Specifically, during a test, coal and rock mass materials are laid on the bearing bottom plate 15, and a box-shaped sealing space is formed by the sealing back plate 11, the lateral sealing plate 12, the sealing bottom plate 14, and the laid coal and rock mass materials together. Water is injected into the sealing space. In such a way, a seepage effect of water on the coal and rock mass can be simulated.

In addition, the bearing bottom plate 15 is slightly lower than the sealing bottom plate 14, allowing the coal and rock mass materials to make full contact with the sealing bottom plate 14, which is conducive to sealing and reduces water leakage due to poor sealing between the coal and rock mass materials and the bearing bottom plate 15.

The bearing bottom plate 15 has a water channel 16, and the water channel is adjacent to the water baffle 13. The water baffle 13 is mainly configured to stop seeping water from flowing out of a test bench and allow the seeping water to flow into the water collection bin 17 through the water channel 16.

Specifically, the bearing bottom plate 15 needs to be laid with the coal and rock mass materials according to actual project situations, to achieve similarity simulation tests on coal and rock mass materials of different widths. The water channel 16 is on a side adjacent to the water baffle 13, which can increase an effective utilization area of the bearing bottom plate 15 and achieve similarity simulation tests on coal and rock mass materials of different widths.

The water collection bin 17 is configured to collect water that seeps out of the coal and rock mass materials during the test. Specifically, during the test, due to a seepage or splitting action of the water, as well as a damaging and destructive effect of the mine pressure on the coal and rock mass materials, the water passes through the coal and rock mass materials and flow into the collection water bin 17 through the water channel 16. The damaging and destructive characteristics of the coal and rock mass materials can be analyzed by monitoring the water seepage amount as a function of time.

The first water outlet pipe 18 is configured to monitor changes in water pressure and discharge the water at the end of the test. Specifically, by a water pressure gauge mounted on the first water outlet pipe 18, changes in water pressure within the box-shaped sealing space formed by the sealing back plate 11, the lateral sealing plate 12, the sealing bottom plate 14, and the laid coal and rock mass materials together can be monitored. Furthermore, after the test is completed, the water in the sealing space can be discharged through the first water outlet pipe 18.

The second water outlet pipe 19 is configured to discharge the water stored in the water collection bin 17. Specifically, the water stored in the water collection bin 17 is discharged through the second water outlet pipe 19, allowing to monitor the water seepage amount as a function of time.

The first connection trunnion 111 is connected to the first end of the hydraulic jack 6. The second connection trunnion 112, the third connection trunnion 113, and the fourth connection trunnion 114 are connected to the lateral carrying frame 2, forming a stable test bench.

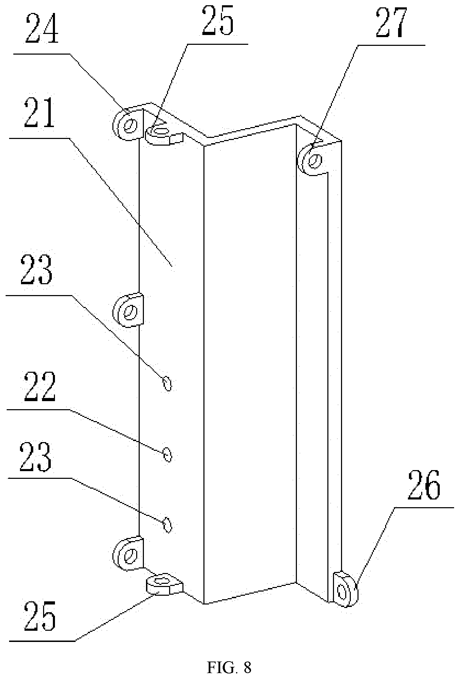

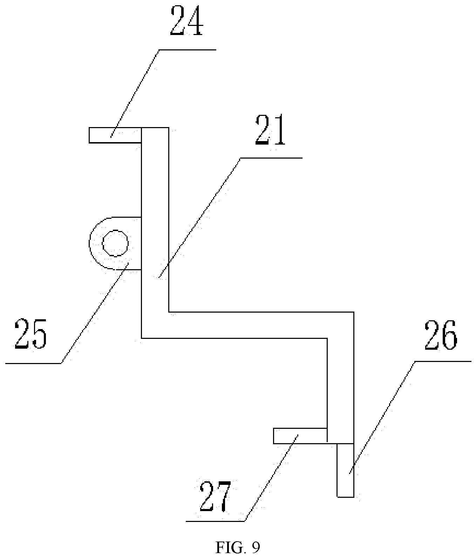

The lateral carrying frame 2 mainly includes a carrying-frame support side plate 21, a carrying-frame guide hole 22, a carrying-frame threaded hole 23, a carrying-frame first connection trunnion 24, a carrying-frame second connection trunnion 25, a carrying-frame third connection trunnion 26, and a carrying-frame fourth connection trunnion 27, as shown in FIGS. 8-9.

The carrying-frame first connection trunnion 24 is connected to the second connection trunnion 112. The carrying-frame second connection trunnion 25 is connected to the fourth connection trunnion 114. The carrying-frame third connection trunnion 26 is connected to the third connection trunnion 113. The carrying-frame fourth connection trunnion 27 is connected to one end of the stabilizing support beam 7.

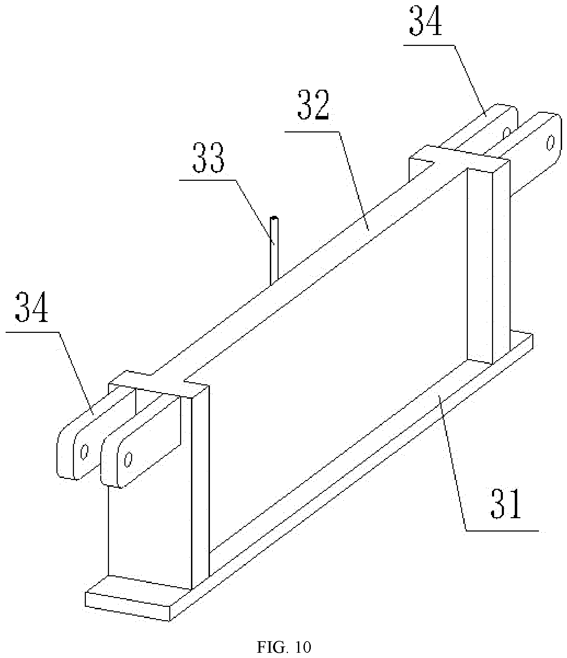

The first loading mechanism 3 mainly includes a first loading pressure plate 31, a first loading rib plate 32, a water injection pipe 33, and a first loading connection trunnion 34, as shown in FIGS. 10-11.

The first loading connection trunnion 34 is connected to the second end of the hydraulic jack 6. Specifically, the first loading pressure plate 31 of the first loading mechanism 3 is within the box-shaped sealing space formed by the sealing back plate 11, the lateral sealing plate 12, the sealing bottom plate 14, and the laid coal and rock mass materials together. Two first loading connection trunnions 34 are connected to respective first ends of the two hydraulic jacks 6. Water is injected into the sealing space through the water injection pipe 33. By simultaneously retracting the two hydraulic jacks 6, pressure can be applied to the water in the sealing space through the first loading pressure plate 31. The magnitude of the pressurizing load can be monitored by a pressure gauge mounted on the first water outlet pipe 18, enabling the simulation and adjustment of changes in the water pressure in the sealing space.

In addition, the first loading rib plate 32 may be of an I-shaped structure, so that the stability of the mechanism can be improved when loads are applied at both ends.

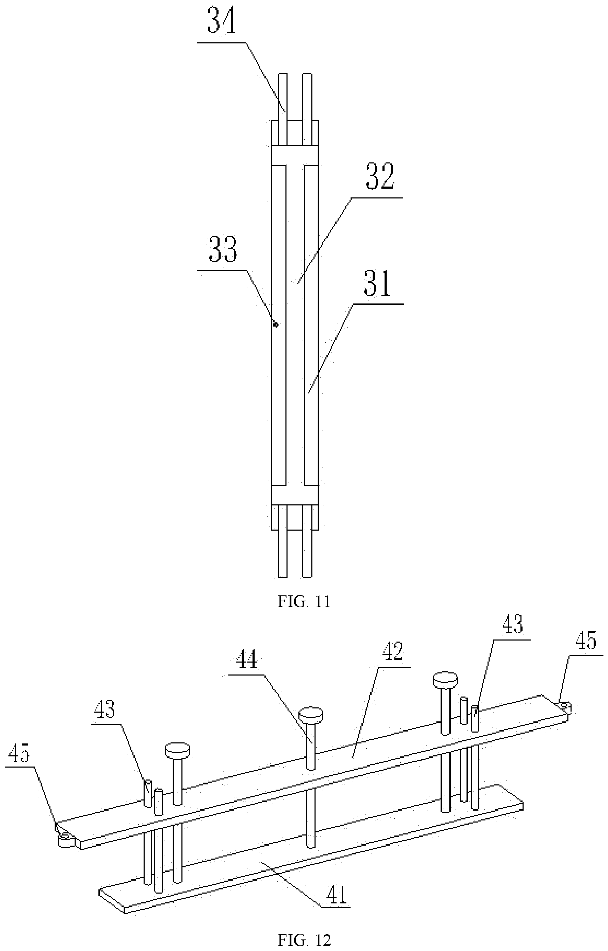

The second vertical loading mechanism 4 mainly includes: a second loading pressure plate 41, a second loading fixing plate 42, a second loading guide pillar 43, a second loading bolt 44, a second loading connection trunnion 45, as shown in FIGS. 12-13.

The second loading pressure plate 41 is fixedly connected to the second loading guide pillar 43. The second loading fixing plate 42 has a guide hole, and the second loading guide pillar 43 can move up and down along the guide hole. The second loading fixing plate 42 has a threaded hole, and the second loading bolt 44 applies a load to the second loading fixing plate 42 through the threaded hole. The second loading connection trunnion 45 is connected to the carrying-frame second connection trunnion 25.

Specifically, the coal and rock mass materials are laid on the bearing bottom plate 15; the second loading pressure plate 41 is arranged on the coal and rock mass materials; the second loading fixing plate 42 is connected to the second loading guide pillar 43 through the guide hole and is connected to the carrying-frame second connection trunnion 25 by the second loading connection trunnion 45. In such a case, pressure can be applied to the second loading pressure plate 41 through the second loading bolt 44, and hence the load is applied to the coal and rock mass materials, realizing control over the magnitude of the load applied to the coal and rock mass materials.

Specifically, during a loading process, the second loading guide pillar 43 can avoid movement of the second loading pressure plate 41 in a wrong direction, ensuring that the load is applied in a vertical direction. Furthermore, since the second loading connection trunnion 45 is connected to the carrying-frame second connection trunnion 25, and the second loading fixing plate 42 has the threaded hole, the second loading bolt 44 can control the magnitude of the load applied to the second loading pressure plate 41 by the number of turns it is rotated, which can realize the small adjustment of the load value and achieve precise control over the applied load.

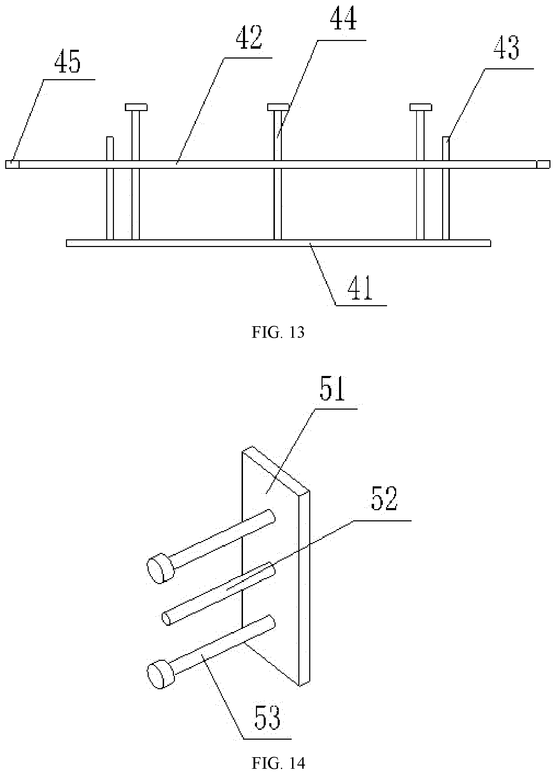

The third lateral loading mechanism 5 mainly includes a third lateral loading pressure plate 51, a third lateral loading guide pillar 52, and a third lateral loading bolt 53, as shown in FIG. 14.

The third lateral loading guide pillar 52 is fixedly connected to the third lateral loading pressure plate 51. The third lateral loading bolt 53 applies a load to the third lateral loading pressure plate 51 through the carrying-frame threaded hole 23.

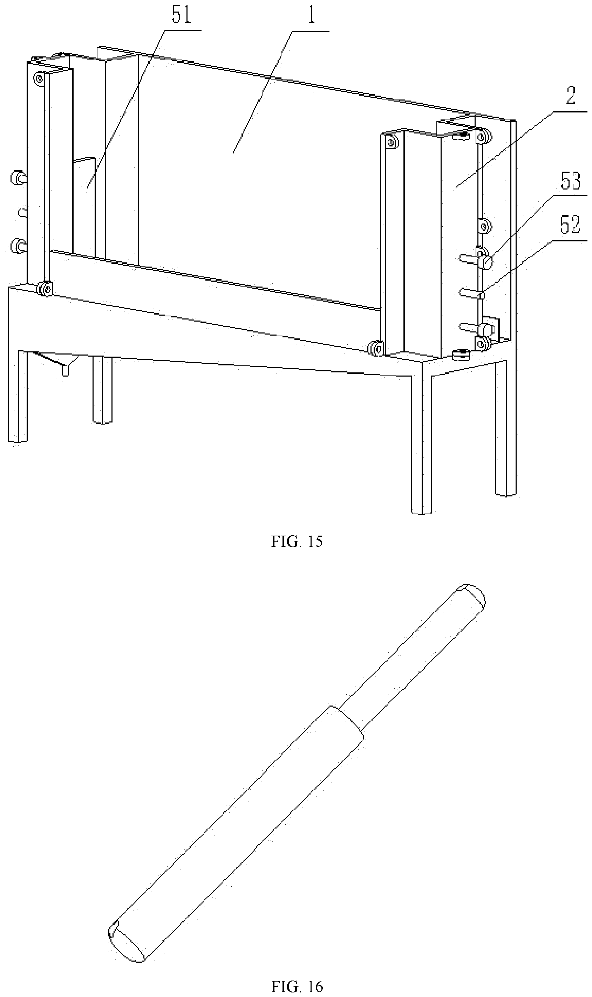

Specifically, the third lateral loading pressure plate 51 is on a side of the lateral carrying frame 2 close to the coal and rock mass, as shown in FIG. 15. The third lateral loading guide pillar 52 passes through the carrying-frame guide hole 22, and a movement direction of the third lateral loading pressure plate 51 is controlled by the third lateral loading guide pillar 52.

In addition, the third lateral loading bolt 53 applies a load to the third lateral loading pressure plate 51 through the carrying-frame threaded hole 23, to apply a lateral load to the coal and rock mass materials by the third lateral loading pressure plate 51.

One end of the hydraulic jack 6 is connected to the first connection trunnion 111 and the other end of the hydraulic jack 6 is connected to the first loading connection trunnion 34, to achieve control over the water pressure, as shown in FIG. 16.

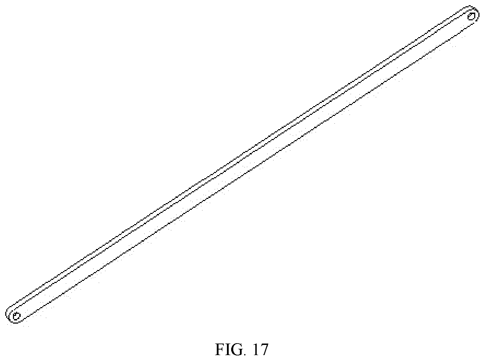

Both ends of the stabilizing support beam 7 are connected to the carrying-frame fourth connection trunnions 27 of the two lateral carrying frames 2, correspondingly, to improve the stability of the test bench, as shown in FIG. 17.

The present invention proposes the similarity simulation test device for solid-liquid coupling of coal and rock mass. The sealing back plate 11, the lateral sealing plate 12, the sealing bottom plate 14, and the laid coal and rock mass materials together form the box-shaped sealing space. The control over water pressure can be achieved by the first loading mechanism 3 and the hydraulic jack 6. The second vertical loading mechanism 4 can realize the vertical loading on the coal and rock mass materials. The third lateral loading mechanism 5 can realize the lateral loading on the coal and rock mass materials. As a result, the requirements of similarity simulation tests for solid-liquid coupling of the coal and rock mass under different water pressure and different mine pressure conditions can be satisfied.

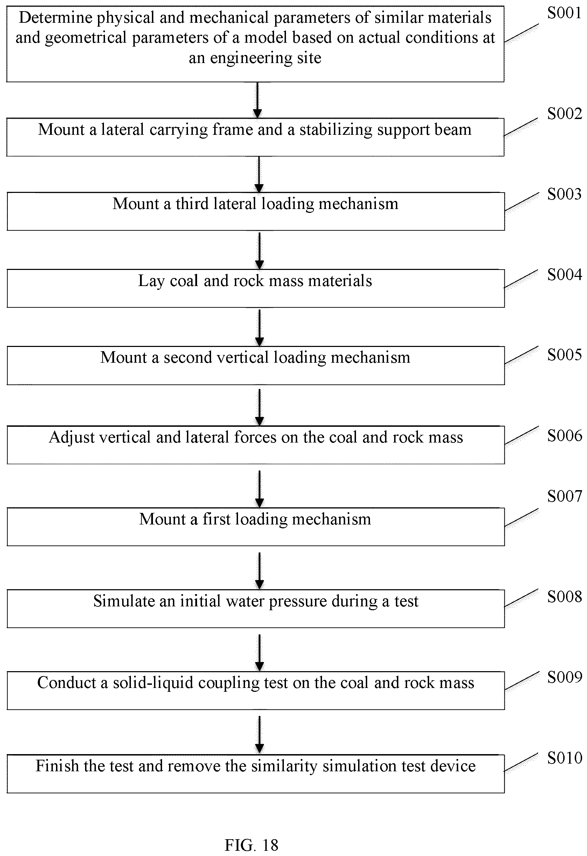

Referring to FIG. 18, the present invention also proposes a method for using the similarity simulation test device for solid-liquid coupling of coal and rock mass. The method includes:
S001, determining physical and mechanical parameters of similar materials and geometrical parameters of a model based on actual conditions at an engineering site;
S002, mounting a lateral carrying frame 2 and a stabilizing support beam 7, in which, specifically, the lateral carrying frame 2 is connected and fixed to a test body carrying frame 1, and both ends of the stabilizing support beam 7 are connected and fixed to two lateral carrying frames 2 correspondingly;
S003, mounting a third lateral loading mechanism 5, in which, specifically, a third lateral loading guide pillar 52 of the third lateral loading mechanism 5 passes through a carrying-frame guide hole 22, and its position is limited by a third lateral loading bolt 53 through a carrying-frame threaded hole 23 according to a size requirement of the coal and rock mass;
S004, laying coal and rock mass materials, in which, specifically, the coal and rock mass materials are laid on a bearing bottom plate 15 according to the geometrical parameters of the model and the physical and mechanical parameters of the model materials;
S005, mounting a second vertical loading mechanism 4, in which, specifically, a second loading pressure plate 41 is arranged on the coal and rock mass materials, a second loading fixing plate 42 is connected to a second loading guide pillar 43 through a guide hole and connected to a carrying-frame second connection trunnion 25 through a second loading connection trunnion 45, and at this time, pressure is exerted on the second loading pressure plate 41 through a second loading bolt 44 to simulate an initial force exerted on the coal and rock mass;
S006, adjusting vertical and lateral forces on the coal and rock mass, in which, specifically, a lateral load imposed by a third lateral loading pressure plate 51 on the coal and rock mass can be adjusted by adjusting a third lateral loading bolt 53, and a vertical load imposed by the second loading pressure plate 41 on the coal and rock mass can be adjusted by adjusting the second loading bolt 44;
S007, mounting a first loading mechanism 3, in which, specifically, both ends of the first loading mechanism 3 are connected to respective first ends of two hydraulic jacks 6, and respective second ends of the two hydraulic jacks 6 are connected to the test body carrying frame 1;
S008, simulating an initial water pressure during the test, in which, specifically, a water pressure gauge is mounted on a first water outlet pipe 18 and seals the first water outlet pipe 18; water is injected through the water injection pipe 33 according to a test requirement; during the water injection, a water level change can be determined by a pressure change of the water pressure gauge; and the water injection is stopped when an initial water pressure value is reached;
S009, conducting a solid-liquid coupling test on the coal and rock mass, in which, specifically, a value of the water pressure to which the coal and rock mass is subjected can be changed by adjusting an extension/retraction stroke of the hydraulic jack 6; the vertical load imposed on the coal and rock mass materials can be changed by adjusting the second loading bolt 44; the lateral load imposed on the coal and rock mass materials can be changed by adjusting the third lateral loading bolt 53; the damage and destroy characteristics of the coal and rock mass materials can be analyzed by monitoring the water seepage amount collected by the water collection bin 17 as a function of time; and additionally, during the test, pressure sensors, displacement sensors and other relevant sensors can be added to monitor the damage and seepage characteristics of the coal and rock mass (the test system mainly provides the usage method of the test device, and users may adopt different monitoring means according to the test needs);
S010, finishing the test and removing the test device, in which, specifically, the water pressure gauge mounted on the first water outlet pipe 18 is removed and the water is discharged; the first loading mechanism 3, the hydraulic jacks 6, the second vertical loading mechanism 4 are removed; the coal and rock mass materials are then removed; the third lateral loading mechanism 5, the stabilizing support beam 7, and the lateral carrying frame 2 are removed.

## Claims

1. A similarity simulation test device for solid-liquid coupling of a coal and rock mass, comprising: a test body carrying frame (1), a lateral carrying frame (2), a first loading mechanism (3), a second vertical loading mechanism (4), a third lateral loading mechanism (5), a hydraulic jack (6), and a stabilizing support beam (7),
wherein:
the similarity simulation test device for solid-liquid coupling of the coal and rock mass comprises one test body carrying frame (1), two lateral carrying frames (2), one first loading mechanism (3), one second vertical loading mechanism (4), two third lateral loading mechanisms (5), two hydraulic jacks (6), and one stabilizing support beam (7);
both ends of the first loading mechanism (3) are connected to respective first ends of the two hydraulic jacks (6), and respective second ends of the two hydraulic jacks (6) are connected to the test body carrying frame (1);
the lateral carrying frames (2) are connected to the test body carrying frame (1), the second vertical loading mechanism (4), the third lateral loading mechanisms (5), and the stabilizing support beam (7);
both ends of the second vertical loading mechanism (4) are connected to the two lateral carrying frames (2), correspondingly;
the third lateral loading mechanisms (5) are connected to the two lateral carrying frames (2); and
both ends of the stabilizing support beam (7) are connected to the two lateral carrying frames (2), correspondingly,
**characterized in that**:
the test body carrying frame (1) comprises: a sealing back plate (11), a lateral sealing plate (12), a water baffle (13), a sealing bottom plate (14), and a bearing bottom plate (15), on which coal and rock mass materials are laid;
a box-shaped sealing space is formed by the sealing back plate (11), the lateral sealing plate (12), the water baffle (13), the sealing bottom plate (14), and the coal and rock mass materials laid on the bearing bottom plate (15);
the first loading mechanism (3) comprises a first loading pressure plate (31), a first loading rib plate (32), a water injection pipe (33), and a first loading connection trunnion (34); and the first loading connection trunnion (34) is connected to the second end of the hydraulic jack (6);
the first loading pressure plate (31) is arranged within the box-shaped sealing space, and the water injection pipe (33) is configured to inject water into the box-shaped sealing space;
an extension/retraction stroke of the two hydraulic jacks (6) is configured to be adjusted to change a value of water pressure to which the coal and rock mass is subjected in the box-shaped sealing space.

2. The similarity simulation test device according to claim 1, wherein:
the test body carrying frame (1) further comprises: a water channel (16), a water collection bin (17), a first water outlet pipe (18), a second water outlet pipe (19), a support leg (110), a first connection trunnion (111), a second connection trunnion (112), a third connection trunnion (113), and a fourth connection trunnion (114);
the sealing back plate (11) is fixedly connected to the lateral sealing plate (12) and the sealing bottom plate (14);
the bearing bottom plate (15) is fixedly connected to the sealing bottom plate (14), and the bearing bottom plate (15) is slightly lower than the sealing bottom plate (14) to form a step;
the bearing bottom plate (15) has a water channel (16), and the water channel is adjacent to the water baffle (13);
the water baffle (13) is configured to stop seeping water from flowing out of a test bench and allow the seeping water to flow into the water collection bin (17) through the water channel (16);
the water collection bin (17) is configured to collect water that seeps out of the coal and rock mass materials during a test;
the first water outlet pipe (18) is configured to monitor changes in water pressure and discharge the water at the end of the test;
the second water outlet pipe (19) is configured to discharge the water stored in the water collection bin (17);
the first connection trunnion (111) is connected to the first end of the hydraulic jack (6); and
the second connection trunnion (112), the third connection trunnion (113), and the fourth connection trunnion (114) are connected to the lateral carrying frame (2), forming a stable test bench.

3. The similarity simulation test device according to claim 1 or 2, wherein:
the lateral carrying frame (2) comprises a carrying-frame support side plate (21), a carrying-frame guide hole (22), a carrying-frame threaded hole (23), a carrying-frame first connection trunnion (24), a carrying-frame second connection trunnion (25), a carrying-frame third connection trunnion (26), and a carrying-frame fourth connection trunnion (27);
the carrying-frame first connection trunnion (24) is connected to the second connection trunnion (112);
the carrying-frame second connection trunnion (25) is connected to the fourth connection trunnion (114);
the carrying-frame third connection trunnion (26) is connected to the third connection trunnion (113); and
the carrying-frame fourth connection trunnion (27) is connected to one end of the stabilizing support beam (7).

4. The similarity simulation test device according to any one of claims 1 to 3, wherein:
the second vertical loading mechanism (4) comprises: a second loading pressure plate (41), a second loading fixing plate (42), a second loading guide pillar (43), a second loading bolt (44), a second loading connection trunnion (45);
the second loading pressure plate (41) is fixedly connected to the second loading guide pillar (43), the second loading fixing plate (42) has a guide hole, and the second loading guide pillar (43) is movable up and down along the guide hole;
the second loading fixing plate (42) has a threaded hole, and the second loading bolt (44) applies a load to the second loading fixing plate (42) through the threaded hole; and
the second loading connection trunnion (45) is connected to the carrying-frame second connection trunnion (25).

5. The similarity simulation test device according to any one of claims 1 to 4, wherein:
the third lateral loading mechanism (5) comprises a third lateral loading pressure plate (51), a third lateral loading guide pillar (52), and a third lateral loading bolt (53);
the third lateral loading guide pillar (52) is fixedly connected to the third lateral loading pressure plate (51); and
the third lateral loading bolt (53) applies a load to the third lateral loading pressure plate (51) through the carrying-frame threaded hole (23).

6. A method for using the similarity simulation test device for solid-liquid coupling of coal and rock mass according to any one of claims 1 to 5, comprising:
S001, determining physical and mechanical parameters of similar materials and geometrical parameters of a model based on actual conditions at an engineering site;
S002, mounting a lateral carrying frame (2) and a stabilizing support beam (7);
S003, mounting a third lateral loading mechanism (5);
S004, laying coal and rock mass materials;
S005, mounting a second vertical loading mechanism (4);
S006, adjusting vertical and lateral forces on the coal and rock mass;
S007, mounting a first loading mechanism (3);
S008, simulating an initial water pressure during a test;
S009, conducting a solid-liquid coupling test on the coal and rock mass;
S010, finishing the test and removing the similarity simulation test device.

## Patentansprüche

1. Ähnlichkeitssimulationsprüfungsvorrichtung für eine Fest-Flüssig-Kopplung einer Kohle- und Gesteinsmasse, umfassend: einen Prüfungskörpertragrahmen (1), einen seitlichen Tragrahmen (2), einen ersten Belastungsmechanismus (3), einen zweiten vertikalen Belastungsmechanismus (4), einen dritten seitlichen Belastungsmechanismus (5), einen hydraulischen Heber (6) und einen stabilisierenden Stützbalken (7),
wobei:
die Ähnlichkeitssimulationsprüfungsvorrichtung für die Fest-Flüssig-Kopplung der Kohle- und Gesteinsmasse einen Prüfungskörpertragrahmen (1), zwei seitliche Tragrahmen (2), einen ersten Belastungsmechanismus (3), einen zweiten vertikalen Belastungsmechanismus (4), zwei dritte seitliche Belastungsmechanismen (5), zwei hydraulische Heber (6) und einen stabilisierenden Stützbalken (7) umfasst;
beide Enden des ersten Belastungsmechanismus (3) mit jeweiligen ersten Enden der zwei hydraulischen Heber (6) verbunden sind und jeweilige zweite Enden der zwei hydraulischen Heber (6) mit dem Prüfungskörpertragrahmen (1) verbunden sind;
die seitlichen Tragrahmen (2) mit dem Prüfungskörpertragrahmen (1), dem zweiten vertikalen Belastungsmechanismus (4), den dritten seitlichen Belastungsmechanismen (5) und dem stabilisierenden Stützbalken (7) verbunden sind;
beide Enden des zweiten vertikalen Belastungsmechanismus (4) entsprechend mit den zwei seitlichen Tragrahmen (2) verbunden sind;
die dritten seitlichen Belastungsmechanismen (5) mit den zwei seitlichen Tragrahmen (2) verbunden sind;
und die beiden Enden des stabilisierenden Stützbalkens (7) entsprechend mit den zwei seitlichen Tragrahmen (2) verbunden sind,
**dadurch gekennzeichnet, dass:**
der Prüfungskörpertragrahmen (1) umfasst: eine abdichtende Rückplatte (11), eine seitliche abdichtende Platte (12), einen Wasserableiter (13), eine abdichtende Bodenplatte (14) und eine tragende Bodenplatte (15), auf die Kohle- und Gesteinsmassenmaterialien gelegt werden;
ein kastenförmiger abdichtender Raum durch die abdichtende Rückplatte (11), die seitliche abdichtende Platte (12), den Wasserableiter (13), die abdichtende Bodenplatte (14) und die auf die tragende Bodenplatte (15) gelegten Kohle- und Gesteinsmassenmaterialien ausgebildet wird;
der erste Belastungsmechanismus (3) eine erste Belastungsdruckplatte (31), eine erste Belastungsrippenplatte (32), ein Wassereinspritzrohr (33) und einen ersten Belastungsverbindungszapfen (34) umfasst; und der erste Belastungsverbindungszapfen (34) mit dem zweiten Ende des hydraulischen Hebers (6) verbunden ist;
die erste Belastungsdruckplatte (31) innerhalb des kastenförmigen abdichtenden Raums angeordnet ist und das Wassereinspritzrohr (33) konfiguriert ist, um Wasser in den kastenförmigen abdichtenden Raum einzuspritzen;
ein Ausfahr-/Einfahrhub der zwei hydraulischen Heber (6) konfiguriert ist, um angepasst zu werden, um einen Wasserdruckwert zu ändern, dem die Kohle- und Gesteinsmasse in dem kastenförmigen abdichtenden Raum ausgesetzt ist.

2. Ähnlichkeitssimulationsprüfungsvorrichtung nach Anspruch 1, wobei:
der Prüfungskörpertragrahmen (1) ferner umfasst: einen Wasserkanal (16), einen Wassersammelbehälter (17), ein erstes Wasserauslassrohr (18), ein zweites Wasserauslassrohr (19), ein Stützbein (110), einen ersten Verbindungszapfen (111), einen zweiten Verbindungszapfen (112), einen dritten Verbindungszapfen (113) und einen vierten Verbindungszapfen (114);
die abdichtende Rückplatte (11) mit der seitlichen abdichtenden Platte (12) und der abdichtenden Bodenplatte (14) fest verbunden ist;
die tragende Bodenplatte (15) mit der abdichtenden Bodenplatte (14) fest verbunden ist und die tragende Bodenplatte (15) etwas tiefer als die abdichtende Bodenplatte (14) ist, um eine Stufe auszubilden;
die tragende Bodenplatte (15) einen Wasserkanal (16) aufweist und der Wasserkanal an den Wasserableiter (13) angrenzt;
der Wasserableiter (13) konfiguriert ist, um ein Ausfließen von sickerndem Wasser aus einem Prüfstand zu verhindern und dem sickernden Wasser zu ermöglichen, durch den Wasserkanal (16) in den Wassersammelbehälter (17) zu fließen;
der Wassersammelbehälter (17) konfiguriert ist, um Wasser zu sammeln, das während einer Prüfung aus der Kohle- und Gesteinsmassenmaterialien sickert;
das erste Wasserauslassrohr (18) konfiguriert ist, um Änderungen des Wasserdrucks zu überwachen und das Wasser am Ende der Prüfung abzulassen;
das zweite Wasserauslassrohr (19) konfiguriert ist, um das in dem Wassersammelbehälter (17) gelagerte Wasser abzulassen;
der erste Verbindungszapfen (111) mit dem ersten Ende des hydraulischen Hebers (6) verbunden ist; und der zweite Verbindungszapfen (112), der dritte Verbindungszapfen (113) und der vierte Verbindungszapfen (114) mit dem seitlichen Tragrahmen (2) verbunden sind, wobei ein stabiler Prüfstand ausgebildet wird.

3. Ähnlichkeitssimulationsprüfungsvorrichtung nach Anspruch 1 oder 2, wobei:
der seitliche Tragrahmen (2) eine Tragrahmen-Stützseitenplatte (21), ein Tragrahmen-Führungsloch (22), ein Tragrahmen-Gewindeloch (23), einen ersten Tragrahmen-Verbindungszapfen (24), einen zweiten Tragrahmen-Verbindungszapfen (25), einen dritten Tragrahmen-Verbindungszapfen (26) und einen vierten Tragrahmen-Verbindungszapfen (27) umfasst;
der erste Tragrahmen-Verbindungszapfen (24) mit dem zweiten Verbindungszapfen (112) verbunden ist;
der zweite Tragrahmen-Verbindungszapfen (25) mit dem vierten Verbindungszapfen (114) verbunden ist;
der dritte Tragrahmen-Verbindungszapfen (26) mit dem dritten Verbindungszapfen (113) verbunden ist; und der vierte Tragrahmen-Verbindungszapfen (27) mit einem Ende des stabilisierenden Stützbalkens (7) verbunden ist.

4. Ähnlichkeitssimulationsprüfungsvorrichtung nach einem der Ansprüche 1 bis 3, wobei:
der zweite vertikale Belastungsmechanismus (4) umfasst: eine zweite Belastungsdruckplatte (41), eine zweite Belastungsbefestigungsplatte (42), eine zweite Belastungsführungssäule (43), einen zweiten Belastungsbolzen (44), einen zweiten Belastungsverbindungszapfen (45);
wobei die zweite Belastungsdruckplatte (41) mit der zweiten Belastungsführungssäule (43) fest verbunden ist, die zweite Belastungsbefestigungsplatte (42) ein Führungsloch aufweist und die zweite Belastungsführungssäule (43) entlang des Führungslochs auf und ab bewegbar ist;
die zweite Belastungsbefestigungsplatte (42) ein Gewindeloch aufweist und der zweite Belastungsbolzen (44) durch das Gewindeloch eine Belastung auf die zweite Belastungsbefestigungsplatte (42) ausübt; und der zweite Belastungsverbindungszapfen (45) mit dem zweiten Tragrahmen-Verbindungszapfen (25) verbunden ist.

5. Ähnlichkeitssimulationsprüfungsvorrichtung nach einem der Ansprüche 1 bis 4, wobei:
der dritte seitliche Belastungsmechanismus (5) eine dritte seitliche Belastungsdruckplatte (51), eine dritte seitliche Belastungsführungssäule (52) und einen dritten seitlichen Belastungsbolzen (53) umfasst;
die dritte seitliche Belastungsführungssäule (52) mit der dritten seitlichen Belastungsdruckplatte (51) fest verbunden ist; und der dritte seitliche Belastungsbolzen (53) durch das Tragrahmen-Gewindeloch (23) eine Belastung auf die dritte seitliche Belastungsdruckplatte (51) ausübt.

6. Verfahren zum Verwenden der Ähnlichkeitssimulationsprüfungsvorrichtung für die Fest-Flüssig-Kopplung von Kohle- und Gesteinsmasse nach einem der Ansprüche 1 bis 5, umfassend:
S001, Bestimmen der physikalischen und mechanischen Parameter ähnlicher Materialien und der geometrischen Parameter eines Modells basierend auf tatsächlichen Bedingungen an einem Entwicklungsstandort;
S002, Montieren eines seitlichen Tragrahmens (2) und eines stabilisierenden Stützbalkens (7);
S003, Montieren eines dritten seitlichen Belastungsmechanismus (5);
S004, Legen von Kohle- und Gesteinsmassenmaterialien;
S005, Montieren eines zweiten vertikalen Belastungsmechanismus (4);
S006, Anpassen der vertikalen und seitlichen Kräfte auf die Kohle- und Gesteinsmasse; S007, Montieren eines ersten Belastungsmechanismus (3);
S008, Simulieren eines anfänglichen Wasserdrucks während einer Prüfung;
S009, Durchführen einer Fest-Flüssig-Kopplungsprüfung an der Kohle- und Gesteinsmasse; S010, Beenden der Prüfung und Entfernen der Ähnlichkeitssimulationsprüfungsvorrichtung.

## Revendications

1. Dispositif de test de simulation de similarité pour le couplage solide-liquide d'un charbon et d'une masse rocheuse, comprenant : un cadre porteur de corps de test (1), un cadre porteur latéral (2), un premier mécanisme de chargement (3), un deuxième mécanisme de chargement vertical (4), un troisième mécanisme de chargement latéral (5), un vérin hydraulique (6), et une poutre de support stabilisatrice (7),
dans lequel :
le dispositif de test de simulation de similarité pour le couplage solide-liquide du charbon et de la masse rocheuse comprend un cadre porteur de corps de test (1), deux cadres porteurs latéraux (2), un premier mécanisme de chargement (3), un deuxième mécanisme de chargement vertical (4), deux troisièmes mécanismes de chargement latéraux (5), deux vérins hydrauliques (6) et une poutre de support stabilisatrice (7) ;
les deux extrémités du premier mécanisme de chargement (3) sont raccordées aux premières extrémités respectives des deux vérins hydrauliques (6), et les secondes extrémités respectives des deux vérins hydrauliques (6) sont raccordées au cadre porteur de corps de test (l) ;
les cadres porteurs latéraux (2) sont reliés au cadre porteur de corps de test (1), au deuxième mécanisme de chargement vertical (4), au troisième mécanisme de chargement latéral (5) et à la poutre de support stabilisatrice (7) ;
les deux extrémités du deuxième mécanisme de chargement vertical (4) sont raccordées aux deux cadres porteurs latéraux (2), de manière correspondante ;
les troisièmes mécanismes de chargement latéral (5) sont raccordés aux deux cadres porteurs latéraux (2) ;
et les deux extrémités de la poutre de support stabilisatrice (7) sont raccordées aux deux cadres porteurs latéraux (2), de manière correspondante,
**caractérisé en ce que**
le cadre porteur de corps de test (1) comprend : une plaque arrière d'étanchéité (11), une plaque d'étanchéité latérale (12), un déflecteur d'eau (13), une plaque inférieure d'étanchéité (14) et une plaque inférieure d'appui (15), sur lesquelles sont posés des matériaux de charbon et de masse rocheuse ;
un espace d'étanchéité en forme de boîte est formé par la plaque arrière d'étanchéité (11), la plaque d'étanchéité latérale (12), le déflecteur d'eau (13), la plaque inférieure d'étanchéité (14) et les matériaux de charbon et de masse rocheuse posés sur la plaque inférieure d'appui (15) ;
le premier mécanisme de chargement (3) comprend une première plaque de pression de chargement (31), une première plaque de nervure de chargement (32), un tuyau d'injection d'eau (33) et un premier tourillon de raccord de chargement (34) ; et le premier tourillon de raccord de chargement (34) est raccordé à la seconde extrémité du vérin hydraulique (6) ;
la première plaque de pression de chargement (31) est agencée à l'intérieur de l'espace d'étanchéité en forme de boîte, et le tuyau d'injection d'eau (33) est conçu pour injecter de l'eau dans l'espace d'étanchéité en forme de boîte ;
une course de rallonge/rétraction des deux vérins hydrauliques (6) est conçue pour être ajustée afin de modifier une valeur de pression d'eau à laquelle le charbon et la masse rocheuse est soumise dans l'espace d'étanchéité en forme de boîte.

2. Dispositif de test de simulation de similarité selon la revendication 1, dans lequel :
le cadre porteur de corps de test (1) comprend en outre : un canal d'eau (16), un bac de collecte d'eau (17), un premier tuyau de sortie d'eau (18), un second tuyau de sortie d'eau (19), un pied support (110), un premier tourillon de raccord (111), un deuxième tourillon de raccord (112), un troisième tourillon de raccord (113), et un quatrième tourillon de raccord (114) ;
la plaque arrière d'étanchéité (11) est raccordée de manière fixe à la plaque d'étanchéité latérale (12) et à la plaque inférieure d'étanchéité (14) ;
la plaque inférieure d'appui (15) est raccordée de manière fixe à la plaque inférieure d'étanchéité (14), et la plaque inférieure d'appui (15) est légèrement plus basse que la plaque inférieure d'étanchéité (14) pour former une marche ;
la plaque inférieure d'appui (15) présente un canal d'eau (16), et le canal d'eau est adjacent au déflecteur d'eau (13) ;
le déflecteur d'eau (13) est conçu pour empêcher l'eau de s'écouler d'un banc de test et permettre à l'eau de s'écouler dans le bac de collecte d'eau (17) à travers le canal d'eau (16) ;
le bac de collecte d'eau (17) est conçu pour collecter l'eau qui s'écoule des matériaux de charbon et de la masse rocheuse pendant un test ;
le premier tuyau de sortie d'eau (18) est conçu pour surveiller des changements de pression de l'eau et évacuer l'eau à la fin du test ;
le second tuyau de sortie d'eau (19) est conçu pour évacuer l'eau stockée dans le bac de collecte d'eau (17) ;
le premier tourillon de raccord (111) est raccordé à la première extrémité du vérin hydraulique (6) ; et le deuxième tourillon de raccord (112), le troisième tourillon de raccord (113) et le quatrième tourillon de raccord (114) sont raccordés au cadre porteur latéral (2), formant ainsi un banc de test stable.

3. Dispositif de test de simulation de similarité selon la revendication 1 ou 2, dans lequel :
le cadre porteur latéral (2) comprend une plaque latérale de support du cadre porteur (21), un trou de guidage du cadre porteur (22), un trou fileté du cadre porteur (23), un premier tourillon de raccord du cadre porteur (24), un deuxième tourillon de raccord du cadre porteur (25), un troisième tourillon de raccord du cadre porteur (26) et un quatrième tourillon de raccord du cadre porteur (27) ;
le premier tourillon de raccord (24) du cadre porteur est raccordé au deuxième tourillon de raccord (112) ;
le deuxième tourillon de raccord du cadre porteur (25) est raccordé au quatrième tourillon de raccord (114) ;
le troisième tourillon de raccord du cadre porteur (26) est raccordé au troisième tourillon de raccord (113) ; et le quatrième tourillon de raccord du cadre porteur (27) est raccordé à une extrémité de la poutre de support stabilisatrice (7).

4. Dispositif de test de simulation de similarité selon l'une quelconque des revendications 1 à 3, dans lequel :
le deuxième mécanisme de chargement vertical (4) comprend : une deuxième plaque de pression de chargement (41), une deuxième plaque de fixation de chargement (42), un deuxième pilier de guidage de chargement (43), un deuxième boulon de chargement (44), un deuxième tourillon de raccord de chargement (45) ;
la deuxième plaque de pression de chargement (41) est raccordée de manière fixe au deuxième pilier de guidage de chargement (43), la seconde plaque de fixation de chargement (42) présente un trou de guidage, et le deuxième pilier de guidage de chargement (43) est mobile vers le haut et vers le bas le long du trou de guidage ;
la seconde plaque de fixation de chargement (42) présente un trou fileté, et le deuxième boulon de chargement (44) applique une charge à la seconde plaque de fixation de chargement (42) à travers le trou fileté ; et le deuxième tourillon de raccord de chargement (45) est raccordé au deuxième tourillon de raccord du cadre porteur (25).

5. Dispositif de test de simulation de similarité selon l'une quelconque des revendications 1 à 4, dans lequel :
le troisième mécanisme de chargement latéral (5) comprend une troisième plaque de pression de chargement latéral (51), un troisième pilier de guidage de chargement latéral (52) et un troisième boulon de chargement latéral (53) ;
le troisième pilier de guidage de chargement latéral (52) est raccordé de manière fixe à la troisième plaque de pression de chargement latéral (51) ; et le troisième boulon de chargement latéral (53) applique une charge à la troisième plaque de pression de chargement latéral (51) à travers le trou fileté du cadre porteur (23).

6. Procédé d'utilisation du dispositif de test de simulation de similarité pour le couplage solide-liquide du charbon et de la masse rocheuse selon l'une quelconque des revendications 1 à 5, comprenant :
S001, la détermination de paramètres physiques et mécaniques de matériaux similaires et de paramètres géométriques d'un modèle sur la base de conditions réelles sur un site d'ingénierie ;
S002, le montage d'un cadre porteur latéral (2) et d'une poutre de support stabilisatrice (7) ;
S003, le montage d'un troisième mécanisme de chargement latéral (5) ;
S004, la pose de matériaux de charbon et de masse rocheuse ;
S005, le montage d'un deuxième mécanisme de chargement vertical (4) ;
S006, le réglage de forces verticales et latérales sur le charbon et la masse rocheuse ; S007, le montage d'un premier mécanisme de chargement (3) ;
S008, la simulation d'une pression d'eau initiale lors d'un test ;
S009, la réalisation d'un test de couplage solide-liquide sur le charbon et la masse rocheuse ;
S010, la fin du test test et le retrait du dispositif de test de simulation de similarité.
